# EUROPÄISCHE PATENTSCHRIFT

(11) **EP 3 500 468 B1**
(45) Veröffentlichungstag und Bekanntmachung des Hinweises auf die Patenterteilung: **23.02.2022**
(21) Anmeldenummer: 17751033.6
(22) Anmeldetag: 19.07.2017
(51) Int. Cl.: B60W 50/08, B60W 30/16

(54) **STEUERUNG EINES NUTZFAHRZEUGS**
CONTROL OF A UTILITY VEHICLE
COMMANDE D'UN VÉHICULE UTILITAIRE

(30) Priorität: 18.08.2016 DE 102016215431
(43) Veröffentlichungstag der Anmeldung: 26.06.2019
(73) Patentinhaber: Voith Patent GmbH, 89522 Heidenheim (DE)
(72) Erfinder: ELSNER, Jochen, 89542 Herbrechtingen (DE); WALTER, Bernd, 89129 Setzingen (DE)
(74) Vertreter: Voith Patent GmbH - Patentabteilung
(86) Internationale Anmeldenummer: PCT/EP2017/068173
(87) Internationale Veröffentlichungsnummer: WO 2018/033331

(56) Entgegenhaltungen:
- EP-A1- 1 672 348
- EP-A1- 1 764 277
- DE-A1- 10 051 353
- DE-A1-102015 015 283
- Mohamed MEZGHANI: "UITP's Standardised On-Road Test (SORT) cycles for measuring fuel consumption", , 6. Februar 2007 (2007-02-06), XP002774990, Gefunden im Internet: URL:http://mohamedmezghani.com/images/stor ies/site/Speeches/11Cairo-February-2007-EN G.pdf [gefunden am 2017-10-24]

## Beschreibung

### Technisches Gebiet

Die Erfindung betrifft die Steuerung eines Kraftfahrzeugs. Insbesondere betrifft die Erfindung die Durchführung eines Sonderfahrbetriebs für ein Kraftfahrzeug.

Ein Linienbus für den innerstädtischen oder vorstädtischen Verkehr soll möglichst sparsam im Betrieb sein. Um verschiedene Busse bezüglich ihrer Kraftstoffverbräuche zu vergleichen kann jeder Bus auf einem vordefinierten Fahrzyklus gefahren und der dabei verbrauchte Kraftstoff ermittelt werden. Um ein möglichst realistisches Ergebnis zu erzielen ist ein On-Road-Test bevorzugt, bei dem der Bus tatsächlich gefahren und nicht auf einem Prüfstand stationär betrieben wird.

Es sind zahlreiche unterschiedliche Fahrzyklen bekannt, von denen etwa 200 in T. J. Barlow, S. Latham, I. S. McCrae, P. G. Boulter: "A reference book of driving cycles for use in the measurement of road vehicle emissions", Published Project Report PPR354, TRL Limited 2009, veröffentlicht sind. Ein weiterer Fahrzyklus namens "SORT - Standardised On-Road Test Cycles" wurde 2014 vom internationalen Verband für öffentliches Verkehrswesen UITP definiert.

DE 10 2013 211 346 A1 schlägt vor, im Betrieb eines Kraftfahrzeugs zu bestimmen, dass ein bekanntes Fahrprofil durchfahren wird, und in Abhängigkeit des Fahrprofils eine Sonderbetriebsart des Kraftfahrzeugs durchzuführen. Die Sonderbetriebsart kann insbesondere die Steuerung eines Dieselpartikelfilters betreffen, um in einem Testbetrieb angepasste Emissionen zu bewirken.

Wird ein Kraftfahrzeug auf einem vorbestimmten Fahrzyklus durch einen menschlichen Fahrer gefahren, so können Verbrauchswerte aufgrund von Unzulänglichkeiten des Fahrers erhöht sein. Eine der vorliegenden Erfindung zu Grunde liegende Aufgabe besteht darin, eine verbesserte Steuerung des Kraftfahrzeugs beim Durchfahren des Fahrzyklus bereitzustellen. Die Erfindung löst diese Aufgabe mittels der Gegenstände der unabhängigen Ansprüche. Unteransprüche geben bevorzugte Ausführungsformen wieder.

EP 1 672 348 A1 schlägt ein Verfahren zum Betreiben eines Kraftfahrzeugs auf einem Rollenprüfstand vor. Auf dem Prüfstand werden vorbestimmte Fahrzyklen erfasst. Die Motorsteuerung erfolgt auf dem Prüfstand über eine externe Steuereinheit, die die Motorsteuerung ersetzt.

### Offenbarung der Erfindung

Ein Fahrzyklus umfasst eine erste Phase der vorbestimmten, konstanten Beschleunigung, eine zweite Phase der vorbestimmten, konstanten Geschwindigkeit, eine dritte Phase der Verzögerung und eine vierte Phase des Stillstands. Ein Verfahren zum Steuern eines Kraftfahrzeugs umfasst Schritte des Erfassens einer Auswahl eines vorbestimmten Fahrzyklus; des fahrerunabhängigen Steuerns eines Antriebsstrangs des Kraftfahrzeugs während der ersten Phase, um die vorbestimmte Beschleunigung einzuhalten; des fahrerunabhängigen Steuerns des Antriebsstrangs während der zweiten Phase, um die vorbestimmte Geschwindigkeit einzuhalten; und des Erfassens einer fahrergesteuerten Verzögerung des Kraftfahrzeugs.

Mehrere aufeinander folgende Fahrzyklen können einen SORT-Testzyklus bilden, der zur Beurteilung eines Kraftstoffverbrauchs durch ein Kraftfahrzeug, insbesondere ein Nutzfahrzeug, weiter bevorzugt eines Stadt- oder Linienbusses verwendet werden kann. Das Verfahren ermöglicht es, das Kraftfahrzeug optimiert durch den Fahrzyklus zu fahren. Die Auswahl eines Testzyklus erfolgt bevorzugt manuell, wobei eine Abfolge von Fahrzyklen innerhalb des Testzyklus bevorzugt bereits festgelegt ist und automatisch abgearbeitet werden kann. Es kann eine Vielzahl von Testzyklen durchfahren werden, um die Bildung eines statistischen Mittelwerts des Kraftstoffverbrauchs zu erlauben.

Ziel des Verfahrens ist, ein vordefiniertes Testszenario möglichst präzise so zu durchfahren, dass Vorgaben für eine gültige Messung erfüllt sind und gleichzeitig ein Kraftstoffverbrauch des Kraftfahrzeugs möglichst minimiert ist. Das Verfahren soll einen idealen Fahrer simulieren, um menschliche Unvollkommenheiten bei der Testfahrt möglichst auszuschalten. Ein Vorteil gegenüber einem optimal sachkundigen und geübten Fahrer soll dabei nicht erzielt werden, sodass das Ergebnis der Messung verbessert aussagekräftig sein kann.

Es ist bevorzugt, dass die fahrerunabhängige Steuerung der ersten und zweiten Phase durchgeführt wird, während ein Fahrpedal zur Beschleunigungssteuerung des Kraftfahrzeugs vollständig betätigt ist. Die Kontrolle über den Antriebsstrang kann durch das vollständige Betätigen des Fahrpedals vom Fahrer auf das Verfahren übertragen werden. Eine Rückübertragung der Kontrolle kann durch eine verringerte Betätigung des Fahrpedals bewirkt werden. Der Testbetrieb kann so rasch und auf intuitive Weise abgebrochen werden, sodass eine Fahrsicherheit gesteigert sein kann. Das vollständige Betätigen des Fahrpedals kann als Signal verstanden werden, dass die Steuerung des Antriebsstrangs nicht mehr durch den Fahrer sondern durch eine Steuervorrichtung bzw. ein darauf ablaufendes Verfahren durchgeführt wird. Außerdem kann so zusätzlich sichergestellt werden, dass das Verfahren nicht versehentlich oder unbemerkt, etwa im Rahmen eines üblichen Fahrbetriebs, durchgeführt wird. Es können noch weitere Bedingungen vorgegeben sein, um die fahrerunabhängige Steuerung einzuleiten oder aufrecht zu erhalten.

Der Antriebsstrang umfasst üblicherweise einen Antriebsmotor, eine Kupplung und ein Getriebe. Es ist bevorzugt, dass in der ersten oder zweiten Phase wenigstens eines der Elemente des Antriebsstrangs derart gesteuert wird, dass ein Kraftstoffverbrauch des Antriebsmotors möglichst minimiert ist. Dabei können weitere Randbedingungen, die zum korrekten oder vorteilhaften Befahren des Fahrzyklus vorgegeben sind, eingehalten werden, beispielsweise ein vorbestimmter Gang, ein vorbestimmter Schaltpunkt oder ein vorbestimmter Lastpunkt des Antriebsmotors.

Ein gültiges Durchfahren des Fahrzyklus kann ein Einhalten vorbestimmter Bewegungsparameter durch das Kraftfahrzeug umfassen, wobei der Antriebsstrang in der ersten und zweiten Phase derart gesteuert wird, dass der Kraftstoffverbrauch des Antriebsmotors möglichst minimiert ist. Insbesondere können Toleranzen, die dem Bewegungsparameter aufgeschlagen werden dürfen, ausgenutzt werden. Soll etwa in der zweiten Phase eine Geschwindigkeit von 30 km/h gefahren werden und ist eine Messung nur gültig, falls die tatsächlich gefahrene Geschwindigkeit um nicht mehr als ±0,5 km/h davon abweicht, so kann der Antriebsstrang des Kraftfahrzeugs derart gesteuert werden, dass die Geschwindigkeit über einen möglichst großen Anteil der zweiten Phase 29,5 km/h beträgt. Es sind auch weitere Gültigkeits- bzw. Ungültigkeitsbedingungen möglich um die Vergleichbarkeit der Messungen sicher zu stellen. In einer Ausführungsform wird ein Signal ausgegeben, falls eine der Gültigkeitsbedingungen verletzt wird, sodass die Messfahrt vorzeitig abgebrochen oder wiederholt werden kann.

Die zweite Phase kann beendet sein, wenn das Kraftfahrzeug eine vorbestimmte Strecke gefahren ist. In einer Ausführungsform wird an einem vorbestimmten Punkt bereits vor dem Ende der zweiten Phase der Antriebsmotor angesteuert, sein abgegebenes Antriebsmoment zu verringern. Der vorbestimmte Punkt kann als Zeitpunkt, insbesondere bezüglich des Beginns der zweiten Phase, oder als Ortspunkt, insbesondere bezüglich des Punkts, an dem sich das Kraftfahrzeug bei Eintritt in die zweite Phase befand, definiert sein. Durch das Rücknehmen des Antriebsmoments kann dem Fahrer signalisiert werden, dass eine Übernahme der Kontrolle über den Antriebsstrang durch ihn für die dritte Phase bevorsteht. Anstelle der Verringerung des Antriebsmoments kann der Antriebsmotor vom Antriebsstrang abgekoppelt werden, etwa durch Öffnen der Kupplung oder Einlegen einer Neutralstellung (Leerlauf) im Getriebe. Bis zum Ende der zweiten Phase kann dann ein sogenanntes Segeln erfolgen, durch das weiterer Kraftstoff eingespart werden kann.

Es ist besonderes bevorzugt, dass der Antriebsstrang ein Getriebe mit Differenzwandler umfasst. Der Differenzwandler umfasst eine Kombination aus einem Umlaufgetriebe, einem hydrodynamischen Drehmomentwandler und üblicherweise noch einem Schaltgetriebe. Der Differenzwandler kann beim Anfahren des Kraftfahrzeugs Drehmoment mittels eines formschlüssigen Radsatzes des Getriebes und gleichzeitig mittels des Drehmomentwandlers übertragen, wobei ein Momentenverhältnis zwischen Radsatz und Drehmomentwandler stufenlos veränderlich sein kann. Insbesondere ist das Momentenverhältnis bevorzugt von einer Drehzahl der Ausgangsseite des Getriebes abhängig. Der Differenzwandler kann verbessert mittels des oben beschriebenen Verfahrens angesteuert werden, um das Kraftfahrzeug optimiert durch den Fahrzyklus zu steuern.

In einer Weiterbildung des Verfahrens kann das fahrergesteuerte Verzögern in der dritten Phase fahrerunabhängig unterstützt werden. Beispielsweise kann ein direkter Übergang von einer zweiten Gangstufe in eine Neutralstellung erfolgen statt wie üblich ein Übergang von der zweiten Gangstufe zunächst in die erste Gangstufe. In einer weiteren Ausführungsform kann der Verzögerungsvorgang durch eine Retarderfunktionalität des Drehmomentwandlers unterstützt werden.

Ein Computerprogrammprodukt umfasst Programmcodemittel zur Durchführung des oben beschriebenen Verfahrens, wenn das Computerprogrammprodukt auf einer Verarbeitungseinrichtung abläuft oder auf einem computerlesbaren Datenträger gespeichert ist. Die Verarbeitungseinrichtung kann insbesondere einen programmierbaren Mikrocomputer umfassen.

### Kurze Beschreibung der Figuren

Beispielhafte Ausführungsformen der Erfindung werden nun mit Bezug auf die beigefügten Figuren genauer beschrieben, in denen:
- Fig. 1: eine schematische Darstellung eines Kraftfahrzeugs;
- Fig. 2: einen beispielhaften Fahrzyklus für ein Kraftfahrzeug; und
- Fig. 3: ein Ablaufdiagramm eines Verfahrens zum Steuern eines Kraftfahrzeugs
darstellt.

### Beschreibung von Ausführungsbeispielen

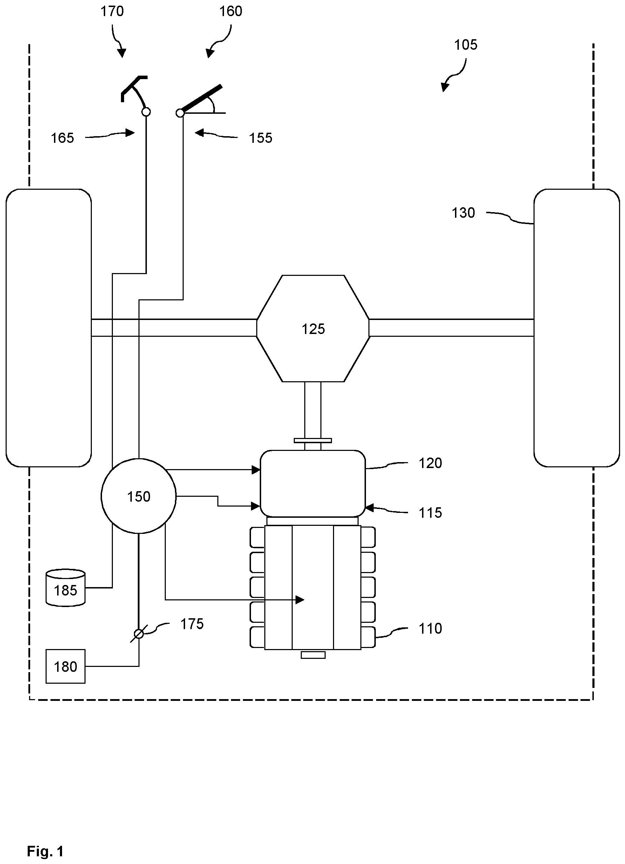

Figur 1 zeigt ein Kraftfahrzeug 100, insbesondere ein Nutzfahrzeug, weiter bevorzugt einen Bus, beispielsweise einen Stadtbus, in einer schematischen Darstellung. Das Kraftfahrzeug 100 umfasst einen Antriebsstrang 105, der einen Antriebsmotor 110, eine Kupplung 115, ein Getriebe 120, ein Differentialgetriebe 125 und ein Antriebsrad 130 umfassen kann. Der Antriebsmotor 110 ist üblicherweise ein Otto- oder Dieselmotor und benötigt zum Betrieb einen Kraftstoff als Energieträger. In einer anderen Ausführungsform kann der Antriebsmotor 110 auch einen anderen Motor wie einen Elektromotor umfassen, der elektrische Energie verwendet, die im Sinne der Anmeldung ebenfalls als Kraftstoff begriffen werden kann.

In der vorliegenden, bevorzugten Ausführungsform ist das Getriebe 120 als Differenzialwandler ("DIWA") ausgeführt, der mit der Kupplung 115 funktional integriert sein kann. Der Differenzialwandler umfasst üblicherweise ein Umlaufgetriebe mit einer Eingangsseite, einer Zwischenseite und einer Ausgangsseite, sowie einen hydrodynamischen Drehmomentwandler mit einem Pumpenrad und einem Turbinenrad, die mittels eines Fluids hydrodynamisch miteinander gekoppelt sind. Die Eingangs- bzw. Ausgangsseite des Umlaufgetriebes bildet auch die Eingangs- bzw. Ausgangsseite des Getriebes 120. Die Zwischenseite des Umlaufgetriebes ist mit dem Pumpenrad verbunden und das Turbinenrad wirkt bevorzugt über einen Freilauf auf die Ausgangsseite. Zum Anfahren des Kraftfahrzeugs arbeitet das Umlaufgetriebe im Dreiwellenbetrieb und das Untersetzungsverhältnis des Umlaufgetriebes ist von einer Drehzahl des Drehmomentwandlers abhängig. Das Getriebe 120 überträgt Drehmoment parallel durch das Umlaufgetriebe und den Drehmomentwandler, wobei ein Verhältnis der übertragenen Momente von einer Drehzahl der Ausgangsseite abhängig ist. Bei höherer Drehzahl kann die Zwischenseite auf eine Drehzahl von null abgebremst bzw. festgestellt werden, sodass das Umlaufgetriebe in den Zweiwellenbetrieb übergeht. Der Freilauf zwischen dem Turbinenrad und der Ausgangsseite kann dabei den Drehmomentwandler von der Ausgangsseite abkoppeln. Das Drehmoment wird dann nur noch mittels des Umlaufgetriebes übertragen. Bevorzugt ist zwischen der Ausgangsseite und dem Differentialgetriebe 125 noch ein Schaltgetriebe vorgesehen. Der Differenzialwandler kann auch angesteuert werden, als Retarder zu arbeiten, wobei Bewegungsenergie der Ausgangsseite in eine Erwärmung des Fluids des Drehmomentwandlers umgesetzt wird.

Eine Steuervorrichtung 150 ist dazu eingerichtet, das Getriebe 120 zu steuern. Dabei kann auch Einfluss auf den Antriebsmotor 110 genommen werden, beispielsweise indem ein Drehmoment, das der Antriebsmotor 110 zur Verfügung stellt, begrenzt bzw. reduziert wird. Auch die Kupplung 115, die als Reibscheibenkupplung ausgeführt sein kann, kann durch die Steuervorrichtung 150 geöffnet oder geschlossen werden. Ein Schlupfbetrieb kann ebenfalls möglich sein.

Die Steuervorrichtung 150 ist bevorzugt mit einer ersten Abtasteinrichtung 155 zur Abtastung der Stellung eines Fahrpedals 160 verbunden, das durch einen Fahrer des Kraftfahrzeugs 105 betätigt werden kann, um ein durch den Antriebsmotor 110 bzw. den Antriebsstrang 105 bereitgestelltes Drehmoment zu steuern. Eine zweite Abtasteinrichtung 165 zur Abtastung einer Betätigung eines Bremspedals 170 kann ebenfalls mit der Steuervorrichtung 150 verbunden sein. Das Bremspedal 170 ist zur Betätigung einer Bremseinrichtung (nicht dargestellt) vorgesehen, wobei die Bremseinrichtung eine Betriebsbremse, einen Retarder oder einen Rekuperator umfassen kann, die auch in Kombination angesteuert werden können.

Bevorzugt ist eine Schnittstelle 175 zur Übertragung von Steuerparametern mit der Steuervorrichtung 150 verbunden. Die Schnittstelle 175 kann insbesondere einen Anschluss an einen fahrzeuginternen Datenbus, etwa einen CAN-Bus, ermöglichen. Signale der Abtasteinrichtungen 165, 170 oder Steuer- oder Betriebsparameter des Antriebsmotors 110 können über den Datenbus übermittelt werden. Eine Bedieneinheit 180 kann mit der Steuervorrichtung 150 verbunden sein oder über die Schnittstelle 175 temporär mit der Steuervorrichtung 150 verbunden werden. In beiden Varianten kann die Steuervorrichtung 150 eine Eingabe und/oder Ausgabe von Parametern der Steuervorrichtung 150 erlauben.

Die Steuervorrichtung 150 ist dazu eingerichtet, den Antriebsstrang 105 beim Durchfahren eines vorbestimmten Fahrzyklus, und bevorzugt auch in einem Normalbetrieb, zu steuern. Parameter des Fahrzyklus können in einem Speicher 185 abgelegt sein und mittels der Bedieneinheit 180 ausgewählt werden. Alternativ können die Parameter auch unmittelbar mittels der Bedieneinheit 180 eingegeben werden, beispielsweise als Datensatz. Die Steuervorrichtung soll den Fahrer beim Durchfahren des vorbestimmten Fahrzyklus unterstützen, um möglichst geringe Verbrauchswerte von Kraftstoff durch den Antriebsmotor 110 zu erzielen.

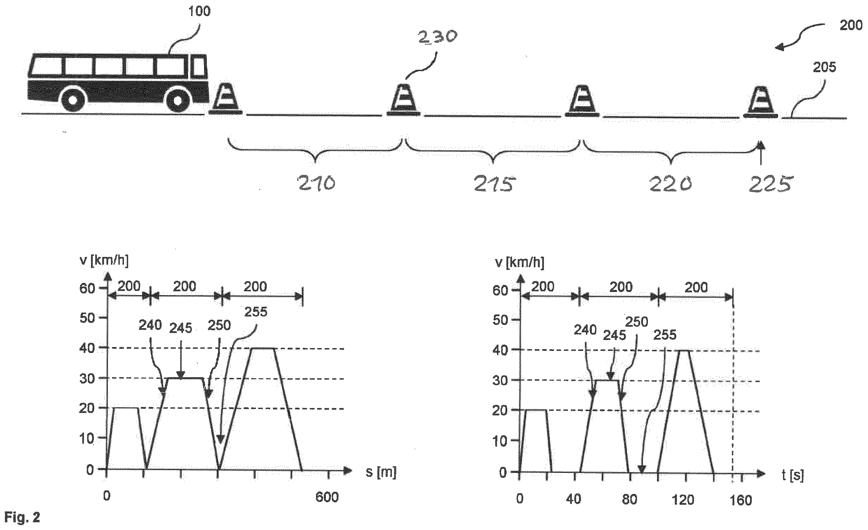

Figur 2 zeigt einen Fahrzyklus 200 für das Kraftfahrzeug 100 aus Figur 1 nach Art eines SORT-Fahrzyklus der UITP. In einer oberen Darstellung ist eine Strecke 205 mit einem ersten Streckenabschnitt 210, einem zweitem Streckenabschnitt 215 und einem dritten Streckenabschnitt 220 dargestellt. Am Ende des dritten Streckenabschnitts 220 ist eine Haltestelle 225 vorgesehen. Zwischen den Streckenabschnitten 210, 215 und 220 sind zur Veranschaulichung Pylone 230 eingezeichnet; diese werden bei einer realen Durchführung des Fahrzyklus 200 üblicherweise tatsächlich als Orientierung für den Fahrer des Kraftfahrzeugs 100 an der Strecke 205 aufgestellt.

In einem unteren Bereich von Figur 2 ist eine exemplarische Parametrierung des Fahrzyklus dargestellt. Das gezeigte Beispiel entspricht im Wesentlichen der Vorgabe "Heavy Urban" des SORT. In einem linken Bereich ist eine Geschwindigkeit (vertikal) über einem Weg (horizontal) auf der Strecke 205 und in einem rechten Bereich eine Geschwindigkeit (vertikal) über einer Zeit (horizontal) dargestellt, wobei beide Darstellungen den gleichen Sachverhalt betreffen. Beide Darstellungen umfassen je drei Fahrzyklen 200, die üblicherweise zusammen einen vorbestimmten Testzyklus bilden. Die zeitliche Reihenfolge der drei Fahrzyklen 200 ist dabei festgelegt und bei der Durchführung wird üblicherweise stets ein kompletter Testzyklus durchfahren, bevorzugt mehrfach hintereinander. Wie die einzelnen Fahrzyklen 200 dabei genau parametriert sind, also an welchen Stellen auf der Strecke 205 bzw. nach welcher Zeit eine Phase 240 bis 255 beginnt oder endet, sowie welche fahrdynamischen Parameter (z. B. Beschleunigung oder Geschwindigkeit des Kraftfahrzeugs 100) zu erbringen sind, kann von einem konkreten Anwendungsfall abhängen.

Jeder Fahrzyklus 200 umfasst bevorzugt eine erste Phase 240 der konstanten Beschleunigung, eine zweite Phase 245 der konstanten Geschwindigkeit, eine dritte Phase 250 der Verzögerung und eine vierte Phase 255 des Stillstands des Kraftfahrzeugs 100. Die Phasen 240 bis 255 korrespondieren paarweise zu den Streckenabschnitten 210 bis 220 und die vierte Phase 255 korrespondiert zur Haltestelle 225. Übergänge zwischen den Phasen 240 bis 250 sind bezüglich bestimmter Wegpunkte auf der Strecke 205 bestimmt, die Phase 255, in der das Kraftfahrzeug 100 stillsteht, ist bezüglich einer Zeit definiert. Außerdem können noch weitere Bedingungen definiert sein, die eine gültige Messung erfordert, etwa ein Schaltschema für Gänge des Getriebes 120 oder eine maximal zulässige Abweichung der Beschleunigung, Geschwindigkeit oder Wartezeit des Kraftfahrzeugs 100 von vorgegebenen Werten.

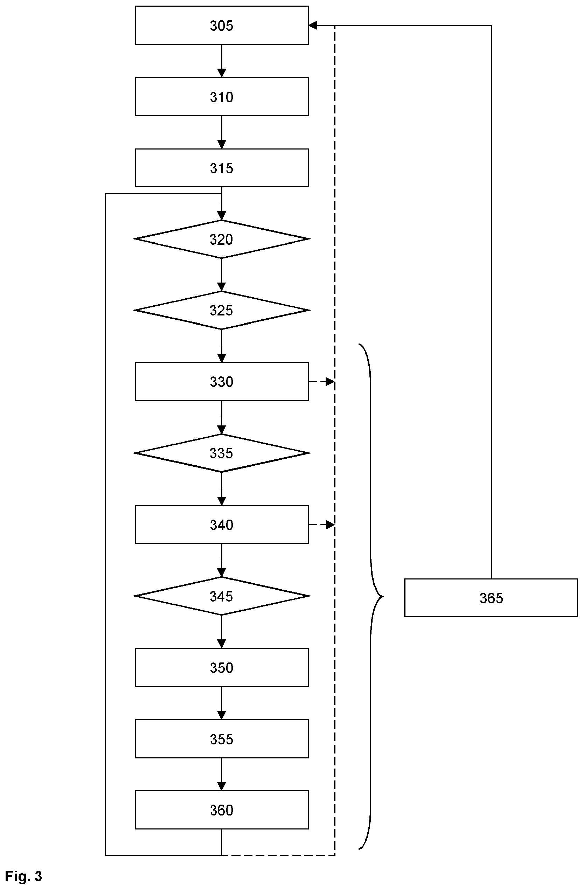

Figur 3 zeigt ein Ablaufdiagramm eines Verfahrens 300 zum Steuern des Kraftfahrzeugs 100 auf dem Fahrzyklus 200. In einem optionalen Schritt 305 wird das Kraftfahrzeug 100 bzw. der Antriebsstrang 105 in einem Normalbetrieb gesteuert. In einem Schritt 310 kann eine Anforderung für einen Sonderbetrieb erfasst werden, der zur Steuerung des Kraftfahrzeugs 100 auf dem Fahrzyklus 200 vorgesehen ist. Die Anforderung kann insbesondere mittels der Bedieneinheit 180 gegeben werden und ist bevorzugt so ausgeführt, dass eine unbemerkte oder unbeabsichtigte Aktivierung erschwert ist. In einem Schritt 315 kann ein Testzyklus ausgewählt oder eingegeben werden.

Bevorzugt wird in einem Schritt 315 überprüft, ob eine oder mehrere Startbedingungen erfüllt sind, bevor das Verfahren 300 fortfährt und den Antriebsstrang 105 fahrerunabhängig beeinflusst. Eine Startbedingung kann lauten, dass das Kraftfahrzeug 100 stillsteht. Eine andere Startbedingung kann eine erfolgreiche Überprüfung des ausgewählten Testzyklus umfassen, um beispielsweise sicher zu stellen, dass keine Beschleunigung oder Geschwindigkeit vorgegeben ist, die das Kraftfahrzeug 100 nicht erreichen kann. Insbesondere wenn ein Fahrzyklus mehrfach hintereinander durchfahren wird, kann außerdem als Startbedingung gelten, dass eine vorbestimmte Wartezeit einer zuvor begonnenen vierten Phase 255 abgelaufen ist. Um fortzufahren ist außerdem bevorzugt, dass ein Fahrer des Kraftfahrzeugs in einem Schritt 325 ein Startsignal gibt, beispielsweise durch das vollständige Betätigen des Fahrpedals 160. Bleibt die vollständige Betätigung des Fahrpedals 160 im weiteren Verlauf des Verfahrens 300 aus, so kann eine fahrerunabhängige Beeinflussung des Antriebsstrangs 105 sofort zurückgenommen werden.

In einem Schritt 330 wird das Fahren des Kraftfahrzeugs 100 in der ersten Phase 240 gesteuert, eine vorbestimmte Beschleunigung zu erbringen ist. Das Anfahren des Kraftfahrzeugs 100 erfolgt bevorzugt aus einer Neutralstellung des Getriebes 120 (Leerlauf) ohne Getriebeblockierung. In einem Normalbetrieb hingegen kann bevorzugt aus einer automatischen Neutralstellung (ANS) mit optionaler Getriebeblockierung heraus angefahren werden. Das durch den Antriebsstrang 105 bereitgestellte Drehmoment wird vorzugsweise bereits ab dem Stillstand entlang einer Kennlinie geführt (vgl. unteren Bereich von Figur 2). So kann die vorbestimmte Sollbeschleunigung erreicht bzw. eingehalten werden und ein Einregeln einer Beschleunigungslimitierung des Antriebsmotors 110 kann verbessert reproduzierbar sein. Die Beschleunigungslimitierung unterscheidet üblicherweise sich funktional nicht vom Normalbetrieb.

Für jede erste Phase 240 eines Testzyklus kann eine individuelle Beschleunigung vorbestimmt sein. Wird eine eingelegte Gangstufe des Getriebes 120 gewechselt, so kann das Drehmoment des Antriebsmotors 110 während des Schaltvorgangs vorgegeben werden. Außerdem können einer oder mehrere Teillast-Schaltpunkte individuell für jede erste Phase 240 eines Fahrzyklus 200 vorgegeben werden, um den Antriebsmotor 110 möglichst unter Volllast zu betreiben. Diese Schaltpunkte können, anders als im Normalbetrieb, bevorzugt auch bei vollständig betätigtem Fahrpedal 160 verwendet werden. Derartige Einstellungen sind üblicherweise nicht Bestandteil der Definition des Fahrzyklus 200, sondern es handelt sich um wählbare Einstellungen für das optimierte Durchfahren eines vorbestimmten Fahrzyklus 200.

Die Steuerung des Antriebsstrangs 105 in der ersten Phase 240 erfolgt insbesondere unter Beachtung der vorgegebenen Randbedingungen im Sinne eines möglichst geringen Kraftstoffverbrauchs. Dazu kann eine Toleranz, die zur Einhaltung der Beschleunigung vorgegeben ist, mit ausgenutzt werden. Kann eine vorgegebene Bedingung nicht erfüllt werden, so kann das Verfahren 300 abbrechen und beispielsweise in den ersten Schritt 105 zurückkehren.

In einem Schritt 335 wird bestimmt, etwa auf der Basis einer bordeigenen Wegstreckenmessung, dass das Kraftfahrzeug 100 den ersten Streckenabschnitt 215 vollständig durchfahren hat. Optional kann zusätzlich bestimmt werden, dass die für die zweite Phase 245 vorbestimmte Geschwindigkeit erreicht wurde. Ab einem Schritt 340 wird der Antriebsstrang 105 in der zweiten Phase 245 auf die vorbestimmte, konstante Geschwindigkeit gesteuert. In einer bevorzugten Ausführungsform betätigt der Fahrer dabei immer noch vollständig das Fahrpedal 160. Für die zweite Phase 245 kann eine bevorzugte Gangstufe vorgegeben werden, um den Antriebsmotor 110 möglichst unter Volllast zu betreiben. Die Anforderung, die erste Phase 240 und/oder die zweite Phase 245 unter Volllast des Antriebsmotors 110 zu durchfahren, kann Teil der Definition des Fahrzyklus 200 sein.

Die Steuerung des Antriebsstrangs 105 in der zweiten Phase 245 erfolgt unter Beachtung der vorgegebenen Randbedingungen im Sinne eines möglichst geringen Kraftstoffverbrauchs. Dazu kann insbesondere eine Toleranz, die zur Einhaltung der Geschwindigkeit vorgegeben ist, mit ausgenutzt werden. Kann eine vorgegebene Bedingung nicht erfüllt werden, so kann das Verfahren 300 abbrechen und beispielsweise in den ersten Schritt 105 zurückkehren.

Möglichst kurz vor dem Erreichen des Endes des zweiten Streckenabschnitts 215 kann der Fahrer die vollständige Betätigung des Fahrpedals 160 zurücknehmen, um den Wunsch nach einer Übernahme der Steuerung des Antriebsstrangs 105 auszudrücken. Die Rücknahme kann etwa bis zu 10, bis zu 5 oder bis zu 3 Sekunden vor dem Erreichen des dritten Streckenabschnitts 220 erfolgen.

In einem vorbestimmten Abstand vor dem Ende des zweiten Streckenabschnitts 215, ausgedrückt als Entfernung oder als Zeit vor dem Erreichen bei der vorbestimmten Geschwindigkeit, kann das durch den Antriebsstrang 105 bereitgestellte Drehmoment fahrerunabhängig reduziert werden, sodass der Antriebsmotor 110 im Schiebebetrieb arbeitet. Dadurch kann der Fahrer darauf vorbereitet werden, dass er das Kraftfahrzeug 100 in der folgenden dritten Phase 245 abbremsen soll. In einer anderen Ausführungsform wird bis zum Erreichen des Endes des zweiten Streckenabschnitts 215 die Kupplung 115 geöffnet und/oder das Getriebe 120 in die Neutralstellung gebracht. Ein derartiges Rollen ohne Antrieb oder Verzögerung des Antriebsmotors 110 ist auch als Segeln bekannt.

Mit dem Eintreten in die dritte Phase 250 wird, falls dies nicht bereits erfolgt ist, in einem Schritt 350 eine passende Gangstufe im Getriebe 120 eingelegt und die Kupplung 15 geschlossen. Der Fahrer erhält daraus einen weiteren Hinweis, dass er die Kontrolle über die Geschwindigkeit des Kraftfahrzeugs 100 übernehmen soll. Der Fahrer kann dann das Bremspedal 165 betätigen und das Kraftfahrzeug 105 möglichst gleichmäßig so verzögern, dass es am Ende des dritten Streckenabschnitts 220 zum Stillstand kommt. Eine fahrerunabhängige Steuerung des Antriebsstrangs 105 findet in diesem Schritt bevorzugt nicht mehr statt, jedoch kann der Antriebsstrang 105 fahrerabhängig gesteuert werden, um den Fahrer zu unterstützen und die Verzögerung zu dosieren bzw. realisieren. Während des Verzögerns kann die Gangstufe im Getriebe 120 unmittelbar vom zweiten Gang in die Neutralstellung gewechselt werden. Im Normalbetrieb wäre hingegen bevorzugt, die Kupplung 115 zu öffnen statt die Neutralstellung einzulegen. Durch die Neutralstellung kann sichergestellt werden, dass das Kraftfahrzeug 100 auch bei nur geringer Betätigung des Bremspedals 170 sicher zum Stillstand kommt und auch in diesem verbleibt. Außerdem kann verhindert werden, dass aufgrund einer anderen Logik die Kupplung 115 geschlossen wird, während ein Gang im Getriebe 120 eingelegt ist.

In einem Schritt 360 kommt das Kraftfahrzeug 100 fahrergesteuert und bevorzugt möglichst genau an der Haltestelle 230 zum Stehen und die vierte Phase 255, in der das Kraftfahrzeug 100 stillsteht, beginnt. Das Verfahren 300 kann nach Ablauf der vorbestimmten Stillstandszeit erneut durchlaufen werden, insbesondere mit Fahrzyklen 200 unterschiedlicher vorbestimmter Parametrierungen (vgl. Fig. 2 unten). Der Fahrer kann das Fahrpedal 160 bereits im Schritt 360 wieder vollständig betätigen und das Verfahren 300 kann in den in Schritt 320 verzweigen, in dem das Verstreichen der vorbestimmten Wartezeit abgewartet werden kann, bevor der nächste Fahrzyklus 200 durchfahren wird. Der Fahrer kann sich auch entscheiden, das Fahrpedal 160 erst nach Ablauf der Wartezeit wieder vollständig zu betätigen, worauf das Verfahren 300 mit dem Schritt 320 oder 325 fortfahren kann. Das Verfahren 300 kann aber auch terminieren oder zum ersten Schritt 305 zurückkehren.

Insbesondere während der Schritte 330 bis 360 kann in einem parallel durchgeführten Schritt 365 überprüft werden, ob noch die Bedingungen für eine gültige Messung erfüllt sind. Dies ist der Fall, wenn alle für eine gültige Messung zu erfüllenden Bedingungen eingehalten sind. Ist wenigstens eine Bedingung nicht erfüllt, so kann ein entsprechendes Signal ausgegeben werden, beispielsweise optisch, akustisch oder haptisch, insbesondere mittels der bordeigenen oder temporär angebrachten Bedieneinheit 180.

Das Verfahren 300 ermöglicht es, den Antriebsstrang 105 des Kraftfahrzeugs 100 derart durch einen Fahrzyklus 200 zu steuern, dass es zumindest in der ersten Phase 240 und der zweiten Phase 240 wie von einem idealen Fahrer gefahren wird. Das Verfahren 300 führt bevorzugt keine Steuerung durch, die nicht auch von einem menschlichen Fahrer erbracht werden könnte, sodass durch das Verfahren 300 kein unrealistischer oder unfairer Vorteil bei der Verbrauchsbestimmung erzielt wird. Das Verfahren 300 kann sicher stellen, dass der Fahrzyklus 200 bzw. ein Testzyklus von mehreren aufeinander folgenden, unterschiedlich parametrisierten Fahrzyklen 200, unter Aufwand von möglichst wenig Kraftstoff mit dem Kraftfahrzeug 100 befahren werden kann. Ungenauigkeiten oder eine begrenzte Wiederholgenauigkeit eines menschlichen Fahrers können vermieden werden.

### Bezugszeichen

- 100: Kraftfahrzeug
- 105: Antriebsstrang
- 110: Antriebsmotor
- 115: Kupplung
- 120: Getriebe
- 125: Differentialgetriebe
- 130: Antriebsrad
- 150: Steuervorrichtung
- 155: erste Abtasteinrichtung
- 160: Fahrpedal
- 165: zweite Abtasteinrichtung
- 170: Bremspedal
- 175: Schnittstelle
- 180: Bedieneinheit
- 185: Speicher

- 200: Fahrzyklus
- 205: Strecke
- 210: erster Streckenabschnitt
- 215: zweiter Streckenabschnitt
- 220: dritter Streckenabschnitt
- 225: Haltestelle
- 230: Pylon
- 240: erste Phase (Beschleunigung)
- 245: zweite Phase (Konstantfahrt)
- 250: dritte Phase (Verzögerung)
- 255: vierte Phase (Stillstand)

- 300: Verfahren
- 305: Normalbetrieb
- 310: Erfassen Anforderung
- 315: Auswählen SORT-Zyklus
- 320: Startbedingungen erfüllt?
- 325: Losfahrbedingung erfüllt?
- 330: Phase 1: Steuerung auf vorbestimmte Beschleunigung
- 335: ersten Streckenabschnitt durchfahren?
- 340: Phase 2: Steuerung auf vorbestimmte Geschwindigkeit
- 345: zweiten Streckenabschnitt durchfahren?
- 350: Übergabe an Fahrer
- 355: Phase 3: Verzögerung. Unterstützen
- 360: Phase 4: Stillstand
- 365: Hinweis, falls Messung ungültig

## Patentansprüche

1. Verfahren (300) zum Steuern eines Kraftfahrzeugs (100) mit einem Antriebsstrang (105), wobei das Verfahren (300) folgende Schritte umfasst:
- Erfassen einer Auswahl eines vorbestimmten Fahrzyklus (200), wobei der Fahrzyklus (200) eine erste Phase (240) der vorbestimmten, konstanten Beschleunigung, eine zweite Phase (245) der vorbestimmten, konstanten Geschwindigkeit, eine dritte Phase (250) der Verzögerung und eine vierte Phase (255) des Stillstands umfasst;
- fahrerunabhängiges Steuern des Antriebsstrangs (105) während der ersten Phase (240), um die vorbestimmte Beschleunigung einzuhalten;
- fahrerunabhängiges Steuern des Antriebsstrangs (105) während der zweiten Phase (245), um die vorbestimmte Geschwindigkeit einzuhalten; und
- Erfassen einer fahrergesteuerten Verzögerung des Kraftfahrzeugs (100).

2. Verfahren (300) nach Anspruch 1, wobei die fahrerunabhängige Steuerung der ersten (240) und zweiten Phase (245) durchgeführt wird, während ein Fahrpedal (160) zur Beschleunigungssteuerung des Kraftfahrzeugs (100) vollständig betätigt ist.

3. Verfahren (300) nach Anspruch 1 oder 2, wobei der Antriebsstrang (105) einen Antriebsmotor (110), eine Kupplung (115) und ein Getriebe (120) umfasst und wenigstens ein Element des Antriebsstrangs (105) in der ersten (240) oder zweiten Phase (245) derart gesteuert wird, dass ein Kraftstoffverbrauch des Antriebsmotors (110) möglichst minimiert ist.

4. Verfahren (300) nach einem der vorangehenden Ansprüche, wobei ein gültiges Durchfahren des Fahrzyklus (200) ein Einhalten vorbestimmter Bewegungsparameter durch das Kraftfahrzeug (100) umfasst und der Antriebsstrang (105) in der ersten (240) und zweiten Phase (245) derart gesteuert wird, dass der Kraftstoffverbrauch eines Antriebsmotors (110) des Antriebsstrangs (105) möglichst minimiert ist.

5. Verfahren (300) nach einem der vorangehenden Ansprüche, wobei die zweite Phase (245) beendet ist, wenn das Kraftfahrzeug (100) eine vorbestimmte Strecke gefahren ist und wobei vor dem Ende der zweiten Phase (245) ein Antriebsmotor (110) des Antriebsstrangs (105) angesteuert wird, sein abgegebenes Antriebsmoment zu verringern.

6. Verfahren (300) nach Anspruch 5, wobei gleichzeitig eine Kupplung (115) des Antriebsstrangs (105) geöffnet oder ein Getriebe (120) des Antriebsstrangs (105) in eine Neutralstellung gebracht wird.

7. Verfahren (300) nach einem der vorangehenden Ansprüche, wobei der Antriebsstrang (105) ein Getriebe (120) mit Differenzwandler umfasst.

8. Verfahren (300) nach einem der vorangehenden Ansprüche, wobei das fahrergesteuerte Verzögern in der dritten Phase (250) fahrerunabhängig unterstützt wird.

9. Computerprogrammprodukt mit Programmcodemitteln zur Durchführung des Verfahrens (300) nach einem der vorangehenden Ansprüche, wenn das Computerprogrammprodukt auf einer Verarbeitungseinrichtung abläuft oder auf einem computerlesbaren Datenträger gespeichert ist.

## Claims

1. Method (300) for controlling a motor vehicle (100) having a drivetrain (105), wherein the method (300) comprises the following steps:
- detecting a selection of a predetermined driving cycle (200), wherein the driving cycle (200) comprises a first phase (240) of predetermined, constant acceleration, a second phase (245) of predetermined, constant speed, a third phase (250) of deceleration and a fourth phase (255) of standstill;
- controlling the drivetrain (105) independently of the driver during the first phase (240) in order to adhere to the predetermined acceleration;
- controlling the drivetrain (105) independently of the driver during the second phase (245) in order to adhere to the predetermined speed; and
- detecting driver-controlled deceleration of the motor vehicle (100).

2. Method (300) according to Claim 1, wherein the first (240) and second phase (245) are controlled independently of the driver while an acceleration pedal (160) for controlling the acceleration of the motor vehicle (100) is fully actuated.

3. Method (300) according to Claim 1 or 2, wherein the drivetrain (105) comprises a drive motor (110), a clutch (115) and a gearbox (120) and at least one element of the drivetrain (105) is controlled in the first (240) or second phase (245) such that a fuel consumption of the drive motor (110) is minimized as far as possible.

4. Method (300) according to one of the preceding claims, wherein a valid run of the driving cycle (200) comprises the motor vehicle (100) adhering to predetermined movement parameters and the drivetrain (105) is controlled in the first (240) and second phase (245) such that the fuel consumption of a drive motor (110) of the drivetrain (105) is minimized as far as possible.

5. Method (300) according to one of the preceding claims, wherein the second phase (245) is ended when the motor vehicle (100) has travelled a predetermined distance and wherein, before the end of the second phase (245), a drive motor (110) of the drivetrain (105) is actuated so as to reduce its output drive torque.

6. Method (300) according to Claim 5, wherein, at the same time, a clutch (115) of the drivetrain (105) is opened or a gearbox (120) of the drivetrain (105) is put into a neutral position.

7. Method (300) according to one of the preceding claims, wherein the drivetrain (105) comprises a gearbox (120) with a differential transducer.

8. Method (300) according to one of the preceding claims, wherein the driver-controlled deceleration in the third phase (250) is assisted independently of the driver.

9. Computer program product containing program code means for performing the method (300) according to one of the preceding claims when the computer program product runs on a processing device or is stored on a computer-readable data carrier.

## Revendications

1. Procédé (300) de commande d'un véhicule automobile (100) comprenant une chaîne cinématique (105), le procédé (300) comprenant les étapes suivantes :
- la détection d'une sélection d'un cycle de conduite prédéterminé (200), le cycle de conduite (200) comprenant une première phase (240) d'accélération constante prédéterminée, une deuxième phase (245) de vitesse constante prédéterminée, une troisième phase (250) de décélération et une quatrième phase (255) d'arrêt ;
- la commande indépendante du conducteur de la chaîne cinématique (105) pendant la première phase (240) afin de respecter l'accélération prédéterminée ;
- la commande indépendante du conducteur de la chaîne cinématique (105) pendant la deuxième phase (245) afin de respecter la vitesse prédéterminée ; et
- la détection d'une décélération du véhicule automobile (100) commandée par le conducteur.

2. Procédé (300) selon la revendication 1, dans lequel la commande indépendante du conducteur de la première (240) et de la deuxième phase (245) est effectuée alors qu'une pédale d'accélération (160) est entièrement actionnée pour commander l'accélération du véhicule automobile (100).

3. Procédé (300) selon la revendication 1 ou 2, dans lequel la chaîne cinématique (105) comprend un moteur d'entraînement (110), un embrayage (115) et une transmission (120), et au moins un élément de la chaîne cinématique (105) est commandé dans la première (240) ou la deuxième phase (245) de manière à minimiser autant que possible une consommation de carburant du moteur d'entraînement (110).

4. Procédé (300) selon l'une quelconque des revendications précédentes, dans lequel un déroulement valide du cycle de conduite (200) comprend un respect de paramètres de déplacement prédéterminés par le véhicule automobile (100), et la chaîne cinématique (105) est commandée dans la première (240) et la deuxième phase (245) de manière à minimiser autant que possible la consommation de carburant d'un moteur d'entraînement (110) de la chaîne cinématique (105).

5. Procédé (300) selon l'une quelconque des revendications précédentes, dans lequel la deuxième phase (245) est terminée lorsque le véhicule automobile (100) a parcouru une distance prédéterminée et dans lequel, avant la fin de la deuxième phase (245), un moteur d'entraînement (110) de la chaîne cinématique (105) est commandé pour réduire son couple d'entraînement fourni.

6. Procédé (300) selon la revendication 5, dans lequel, simultanément, un embrayage (115) de la chaîne cinématique (105) est ouvert ou une transmission (120) de la chaîne cinématique (105) est amenée dans une position neutre.

7. Procédé (300) selon l'une quelconque des revendications précédentes, dans lequel la chaîne cinématique (105) comprend une transmission (120) à convertisseur différentiel.

8. Procédé (300) selon l'une quelconque des revendications précédentes, dans lequel la décélération commandée par le conducteur dans la troisième phase (250) est supportée indépendamment du conducteur.

9. Produit de programme informatique comprenant des moyens de code de programme pour réaliser le procédé (300) selon l'une quelconque des revendications précédentes lorsque le produit de programme informatique est exécuté sur un dispositif de traitement ou est stocké sur un support de données lisible par ordinateur.
